# EUROPEAN PATENT SPECIFICATION

(11) **EP 4 402 183 B1**
(45) Date of publication and mention of the grant of the patent: **18.06.2025**
(21) Application number: 22901829.6
(22) Date of filing: 01.12.2022
(51) Int. Cl.: C08F 210/16, C08F 210/06, C08F 2/01, C08F 2/34

(54) **APPARATUS FOR MANUFACTURING POLYOLEFIN**
VORRICHTUNG ZUR HERSTELLUNG VON POLYOLEFIN
APPAREIL DE FABRICATION DE POLYOLÉFINE

(30) Priority: 03.12.2021 KR 20210172173
(43) Date of publication of application: 24.07.2024
(73) Proprietor: SK Innovation Co., Ltd., Seoul 03188 (KR); SK Geo Centric Co., Ltd., Seoul 03161 (KR)
(72) Inventor: KIM, Dae Hak, Daejeon 34124 (KR); KWAK, Gil Su, Daejeon 34124 (KR); NA, Sung Jae, Daejeon 34124 (KR); SHIN, Sang Young, Daejeon 34124 (KR)
(74) Representative: Frick, Robert
(86) International application number: PCT/KR2022/019373
(87) International publication number: WO 2023/101471

(56) References cited:
- EP-A1- 3 766 570
- WO-A1-2008/095807
- WO-A1-2020/081202
- WO-A2-2008/015113
- CN-A- 107 835 822
- CN-A- 110 885 492
- CN-A- 111 995 703
- US-A1- 2020 255 554
- US-B2- 11 180 586

## Description

### [Technical Field]

The present invention relates to an apparatus for manufacturing a polyolefin, and more particularly, to an apparatus for manufacturing a polyolefin, which includes a single gas phase reactor.

### [Background Art]

As a polymerization method of olefins for producing various types of polyolefins such as polyolefin copolymers including polyethylene, polypropylene, and the like, a method of forming a polymerization slurry of a solid polymer and a liquid monomer, and polymerizing the polyolefin using a gas phase reactor is known in the art. Unipole process using two gas-phase fluidized bed reactors is more economically feasible than other polyolefin polymerization methods, and a slurry polymerization method using a monomer such as propylene as a polymerization medium may maximize a rate of polymerization reaction by providing high concentration monomers.

Meanwhile, molecular weight (MW) and molecular weight distribution (MWD) affect physical and mechanical properties of polyolefin, as well as applications thereof. The higher the molecular weight, the higher the mechanical properties of the polyolefin, but the lower the fluidity, such that difficulties arise in the manufacturing process.

In order to improve the mechanical and physical properties of the polyolefin produced in the gas phase reactor, a multi-stage polymerization method, in which a plurality of slurry polymerization reactors and gas phase reactors are continuously connected, is used. In a process including a loop reactor and a gas phase reactor (GPR), in order to produce reactor-made thermoplastic polyolefin (rTPO) products containing 30% or more of ethylene-propylene rubber (EPR), a Double GPR system, in which at least two gas phase reactors are connected, is required.

In this regard, European Patent Registration EP 0503791 B1 discloses a process for manufacturing a polymer having a relatively high molecular weight by Double GPRs which are connected in series. However, due to differences in the molecular weight, chemical composition and crystallinity in the respective reactors of the series-connected process, the homogeneity of the finally produced polymer is deteriorated. In addition, in the case of the Double GPR system, there are problems in that frequent inspections are required due to trouble caused by valves during transferring particles, and additional facilities such as a recycle compressor, a gas separation/recovery facility and a particle transfer facility are required, as compared to the single gas phase reactor (Single GPR) system.

CN 111 995 703 A, WO 2008/095807 A1 and US 11,180,586 B2 each disclose an apparatus for the manufacturing of a polyolefin, where loop and gas phase reactors are used in combination. EP 3 766 570 A1 discloses a variant without a gas phase reactor.

Further prior art showing different embodiments of an apparatus for the manufacturing of a polyolefin comprises US 2020/255554 A1, WO 2020/081202 A1, WO 2008/015113 A2, CN 107 835 822 A and CN 110 885 492 A.

### [Disclosure]

### [Technical Problem]

It is an object of the present invention to provide an apparatus for manufacturing a polyolefin with improved process efficiency and stability, which may produce a thermoplastic polyolefin including ethylene-propylene rubber in a high content while including a single gas phase reactor.

### [Technical Solution]

To achieve the above object, according to the present invention, there is provided an apparatus for manufacturing a polyolefin, which is an apparatus for producing a prepolymer or a polymer by continuously polymerizing an olefin monomer, and includes: a loop reactor including a first reaction space; and a single gas phase reactor including a second reaction space into which a first product produced in the loop reactor is introduced.

A volume ratio of the second reaction space to the first reaction space is 1.2 or more.

In some embodiments, the loop reactor may be configured to produce a first product from a slurry including a liquid olefin monomer and a polyolefin in the first reaction space.

In some embodiments, the loop reactor may be a plurality of loop reactors which are connected in series.

In some embodiments, the loop reactor may be configured to operate at an operating temperature 50 to 100 °C.

In some embodiments, the loop reactor may be configured to operate at an operating pressure 10 to 100 bar.

In some embodiments, the loop reactor may be configured to operate in a hydrogen (H₂) atmosphere at a concentration of 300 to 40,000 ppmv.

In some embodiments, the single gas phase reactor may be configured to form a polyolefin including ethylene-propylene rubber in the second reaction space.

In some embodiments, the gas phase reactor may be configured to operate at an operating temperature of 50 to 100 °C.

In some embodiments, the gas phase reactor may be configured to operate at an operating pressure of 1 to 60 bar.

In some embodiments, the polyolefin may have an ethylene-propylene rubber (EPR) content of 30% or more.

In some embodiments, the polyolefin may be impact polypropylene (impact PP).

### [Advantageous Effects]

The apparatus for manufacturing a polyolefin according to the invention is an apparatus for producing a prepolymer or a polymer by continuously polymerizing an olefin monomer, and includes: a loop reactor including a first reaction space; and a single gas phase reactor including a second reaction space into which a first product produced in the loop reactor is introduced, wherein the volume ratio of the second reaction space to the first reaction space is adjusted to 1.2 or more. Therefore, it is possible to prepare a polyolefin including high content ethylene-propylene rubber such as impact polypropylene, only by the configuration of a single gas phase reactor without having a plurality of gas phase reactors.

In addition, since the apparatus for manufacturing a polyolefin is configured as a single gas phase reactor, there is no need to provide additional facilities such as a circulation compressor, a gas separation/recovery facility and a particle transfer facility, thereby process efficiency and stability may be improved.

### [Description of Drawings]

FIG. 1 is a schematic view of an apparatus for manufacturing a polyolefin ('polyolefin manufacturing apparatus') according to an exemplary embodiment.
FIG. 2 is a schematic view of a polyolefin manufacturing apparatus according to another exemplary embodiment.

### [Mode for Invention]

Hereinafter, specific embodiments of the present invention will be described with reference to the accompanying drawings.

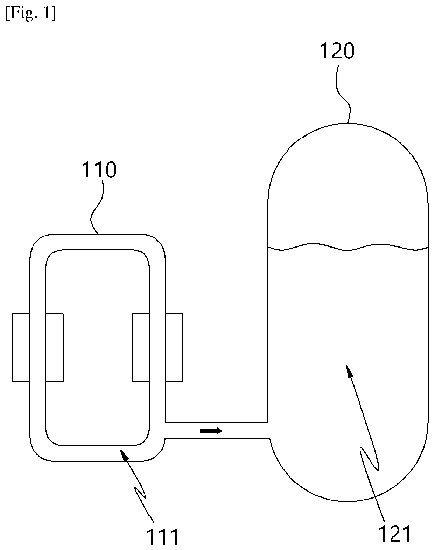

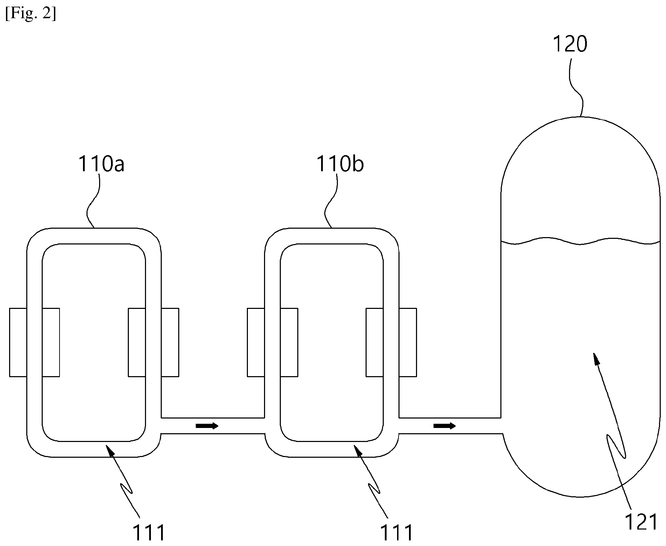

FIG. 1 is a schematic view of a polyolefin manufacturing apparatus according to an exemplary embodiment. FIG. 2 is a schematic view of a polyolefin manufacturing apparatus according to another exemplary embodiment.

Referring to FIGS. 1 and 2, a polyolefin manufacturing apparatus according to an exemplary embodiment may include a loop reactor 110 including a first reaction space 111, and a single gas phase reactor 120 including a second reaction space 121.

The polyolefin manufacturing apparatus refers to an apparatus configured to supply one or more of olefin monomers to the polyolefin manufacturing apparatus, and recover the polyolefin produced through polymerization.

The olefin monomer may be ethylene or propylene, but it is not limited thereto, and other olefin monomers may also be used. Other olefin monomers may include, for example, olefins having 4 to 8 carbon atoms. Accordingly, it is possible to prepare a homopolymer of ethylene or propylene or a copolymer of ethylene and/or propylene with one or more alpha olefin monomers consisting of 4 to 8 carbons. Preferred olefin monomers include, without limitation thereof, but-1-ene, isobutene, pent-1-ene, hex-1-ene, hexadiene, isoprene, styrene, 4-methylpent-1-ene, oct-1-ene and butadiene.

When using the polyolefin manufacturing apparatus according to the exemplary embodiment for copolymerization of an olefin monomer with ethylene and/or propylene, it is preferable to use ethylene and/or propylene as a main ingredient of the copolymer.

The loop reactor 110 is a pipe-type reactor in which the first reaction space 111 is arranged in a loop shape. In order to facilitate heat transfer required for the reaction and shorten the residence time of reactants, it is preferable that the loop reactor 110 has a high volume ratio compared to the surface area. The loop reactor 110 may be disposed so that a plurality of loop reactors 110a and 110b are connected in series.

The loop reactor 110 may use a prepolymer in the first reaction space 111 to form a slurry including a liquid olefin monomer and a polyolefin, then a homopolymer consisting of homo-olefin monomer units is formed from the slurry.

The prepolymer may be produced by polymerizing a mixture of an external electron donor and an olefin with a catalyst and/or a cocatalyst in a separate prepolymerization reactor, and may be solid polymer particles having a polymer attached to the surface of the catalyst.

The catalyst may be any catalyst capable of manufacturing the desired polyolefin polymer. For example, the catalyst may be, in particular, Ziegler-Natta catalysts based on transition metals such as titanium, zirconium and/or vanadium catalysts, but it is not limited thereto.

The cocatalyst activates the catalyst and allows the catalyst to maintain high activity. The cocatalyst may be a metal alkyl compound, but it is not limited thereto, and may be, for example, ethylaluminum dichloride, diethylaluminum chloride, ethylaluminum sesquichloride, dimethylaluminum chloride, trimethylaluminum, triethylaluminum, triisobutylaluminum, trihexylaluminum, tri-n-octylaluminum, methylaluminoxane (MAO), hexaisobutylaluminoxane (HIBAO), tetraisobutyl aluminoxane (TIBAO), isoprenylaluminum.

The external electron donor is an electron donor compound used as a reactant in polyolefin polymerization. The external electron donor contains at least one functional group capable of donating at least one pair of electrons to a metal atom, and may have an effect on stereoselectivity, hydrogen sensitivity, ethylene sensitivity, randomness of comonomer incorporation and catalyst productivity of a catalyst system in polyolefin polymerization. The external electron donor may be an electron donor consisting of, for example, an organosilane compound containing Si-OCOR, Si-OR and/or Si-NR₂ bonds having silicon as a central atom and alkyl, alkenyl, aryl, arylalkyl or cycloalkyl having 1 to 20 carbon atoms represented by R.

Meanwhile, the prepolymer may be introduced into the loop reactor 110 through an appropriate means such as a pump in the form of a liquid phase/liquid stream.

An operating temperature of the loop reactor 110 may be 50 to 100 °C, preferably 55 to 95 °C, and more preferably 60 to 90 °C. In the above operating temperature range, it is possible to suppress overheating, softening and aggregation of particles, as well as induce an appropriate polymerization reaction to the homopolymer.

An operating pressure of the loop reactor 110 may be 10 to 100 bar, preferably 20 to 80 bar, and more preferably 30 to 60 bar. In order to properly maintain a density of the homopolymer to be prepared, it is preferable to maintain the operating pressure within the above range.

The loop reactor 110 may be operated in a hydrogen (H₂) atmosphere at a concentration of 300 to 40,000 ppmv in order to control the molecular weight of the homopolymer, preferably in a hydrogen (H₂) atmosphere at a concentration of 400 to 35,000 ppmv, and more preferably in a hydrogen (H₂) atmosphere at a concentration of 500 to 30,000 ppmv. When increasing the concentration of hydrogen, a melt flow index (MFI) of the produced homopolymer may be increased, and if decreasing the concentration of hydrogen, the melt flow index of the homopolymer may be decreased.

The single gas phase reactor 120 is a reactor which receives a reaction gas mixture from a lower portion of the gas phase reactor 120, removes the gas from an upper portion again, and performs a polymerization reaction in an internal space maintained in a fluidized state, and may receive the homopolymer formed in the loop reactor 110 through an appropriate means, and perform a gas phase reaction to form a polyolefin.

The polyolefin obtained from the single gas phase reactor 120 may be a random copolymer, a block copolymer or an impact copolymer, wherein the impact copolymer may contain an intimate mixture of polyolefin and polyolefin rubber. For example, an impact copolymer including polyolefin rubber may be formed. Examples of the polyolefin rubber may include ethylene-propylene rubber (EPR) and terpolymer rubber of ethylene-propylene-diene monomer (EPDM).

In particular, the single gas phase reactor 120 may form a polyolefin including ethylene-propylene rubber by forming ethylene-propylene rubber inside the homopolymer, and the formed polyolefin may contain 30% or more of ethylene-propylene rubber (EPR). Polyolefin containing 30% or more of ethylene-propylene rubber (EPR) may have remarkably enhanced impact strength by the ethylene-propylene rubber. The ethylene-propylene rubber having rubber-like properties may be present with being phase-separated in the polyolefin matrix of rigid phase.

In addition, the polyolefin may be impact polypropylene (impact PP). The impact polypropylene consists of ethylene-propylene rubber (EPR) and polypropylene homopolymer, which is a polymer polymerized to compensate for the weakness of brittle polypropylene homopolymer having a low impact strength.

The operating temperature of the single gas phase reactor 120 may be 50 to 100 °C, preferably 55 to 95 °C, and more preferably 60 to 90 °C. The operating pressure of the single gas phase reactor 120 may be 1 to 60 bar, preferably 3 to 50 bar, and more preferably 5 to 40 bar. In order to form a polyolefin containing high content ethylene-propylene rubber, it is preferable to maintain the operating temperature and operating pressure within the above ranges.

The gas phase reactor 120 may be operated at a gas phase reactor level (GPR level) of about 30 to 70%. The gas phase reactor level (GPR level) refers to a height of a polymer particle bed staying inside the gas phase reactor 120 with respect to the height of the gas phase reactor 120. If the gas phase reactor level is less than about 30%, it may be difficult to form a stable fluidized bed, and if it exceeds about 70%, the risk of some particles being carried over to the upper portion of the reactor by gas may be increased.

In an exemplary embodiment, a volume ratio of the second reaction space 121 to the first reaction space 111 may be 1.2 or more. If the volume ratio is less than 1.2, there is a problem in that the content of the ethylene-propylene rubber included in the polyolefin is less than 30%. When the volume ratio of the second reaction space 121 to the first reaction space 111 is 1.2 or more, the content of ethylene-propylene rubber included in the polyolefin may be 30% or more, such that the desired effect may be achieved. Therefore, an upper limit of the volume ratio is not particularly limited. In some exemplary embodiments, in consideration of polymer uniformity or process efficiency, the upper limit of the volume ratio may be 5.0, or in some exemplary embodiments, the upper limit of the volume ratio may be 3.0, but it is not limited thereto.

### Examples and Comparative Examples

Ethylene, propane diluent and hydrogen were continuously put into a premixing tank together with a catalyst, and mixed for a predetermined time, then propylene was introduced into a prepolymerization reactor to form a prepolymer.

The formed prepolymer was introduced into a loop reactor, and a slurry reaction was performed with liquid propylene in a hydrogen atmosphere to form a homopolymer. In this case, the operating temperature and the operating pressure of the loop reactor were set to be 80°C and 40 bar, respectively, and the concentration of hydrogen was set to be 10,000 ppmv.

The formed homopolymer was introduced into a gas phase reactor, and a gas phase reaction was performed in ethylene, propylene and hydrogen atmospheres to prepare a polyolefin. In this case, the operating temperature and the operating pressure of the gas phase reactor were set to be 80°C and 10 bar, respectively, and the gas phase reactor level (GPR level) was set to be about 65%.

Conditions of the loop reactor and the gas phase reactor used in the examples and comparative examples are shown in Table 1 below.

**[TABLE 1]**

| Section | Reaction space volume (m³) | | Volume ratio of reaction spaces (Gas phase reactor / Loop reactor) |
|---|---|---|---|
| | Loop reactor | Gas phase reactor | |
| Example 1 | 72 | 96 | 1.33 |
| Example 2 | 72 | 144 | 2.00 |
| Example 3 | 70 | 84 | 1.20 |
| Comparative Example 1 | 72 | 44 | 0.61 |
| Comparative Example 2 | 174 | 190 | 1.09 |

Properties of the finally obtained polyolefins are shown in Table 2 below.

EPR content means XS content measured by using a Crystex instrument (manufactured by Polymer Char). According to ASTM D1238, MI was measured in the temperature of 230 °C and the weight of 2.16 kg. I-zod was measured by setting a sample made from the molded polyolefin to the thickness of 3.2mm and by measuring the injected sample at each temperature (23°C and -20°C) according to ASTM D256. According to ASTM D648, bending strength was measured by an injected sample.

**[TABLE 2]**

| Section | EPR content (%) | MI (g/10min) | I-zod (23°C) | I-zod (-20°C) | Bending strength (kgf/cm²) |
|---|---|---|---|---|---|
| Example 1 | 33.6 | 23.1 | 62.4 | 9.7 | 7131 |
| Example 2 | 37.8 | 21.3 | 63.5 | 10.4 | 7482 |
| Example 3 | 31.5 | 24.0 | 61.5 | 9.5 | 7070 |
| Comparative Example 1 | 17.5 | 33.5 | 6.3 | 3.1 | 11358 |
| Comparative Example 2 | 25.1 | 32.1 | 28.2 | 4.5 | 10669 |

Referring to Tables 1 and 2, it can be confirmed that, when the volume ratio of the gas phase reactor to the reaction space of the loop reactor is 1.20 or more, it is possible to prepare a polyolefin having an ethylene-propylene rubber (EPR) content of 30% or more only by the configuration of the single gas phase reactor.

Therefore, in the polyolefin manufacturing apparatus according to the exemplary embodiments, by adjusting the volume ratio of the gas phase reactor to the reaction space of the loop reactor within the above-described range, it is possible to efficiently produce a polyolefin including high content of ethylene-propylene rubber, in particular, impact polypropylene, only by the configuration of the single gas phase reactor without having a plurality of gas phase reactors.

## Claims

1. An apparatus for manufacturing a polyolefin comprising:
a loop reactor (110) including a first reaction space (111); and
a single gas phase reactor (120) including a second reaction space (121) into which a first product produced in the loop reactor (110) is introduced;
wherein a volume ratio of the second reaction space (121) to the first reaction space (111) is 1.2 or more.

2. The apparatus for manufacturing a polyolefin according to claim 1, wherein the loop reactor (110) is configured to produce the first product from a slurry including a liquid olefin monomer and a polyolefin in the first reaction space (111).

3. The apparatus for manufacturing a polyolefin according to claim 1, wherein the loop reactor (110) is a plurality of loop reactors (110a, 110b) which are connected in series.

4. The apparatus for manufacturing a polyolefin according to claim 1, wherein the loop reactor (110) is configured to operate at an operating temperature of 50 to 100°C.

5. The apparatus for manufacturing a polyolefin according to claim 1, wherein the loop reactor (110) is configured to operate at an operating pressure of 10 to 100 bar.

6. The apparatus for manufacturing a polyolefin according to claim 1, wherein the loop reactor (110) is configured to operate in a hydrogen (H₂) atmosphere at a concentration of 300 to 40,000 ppmv.

7. The apparatus for manufacturing a polyolefin according to claim 1, wherein the gas phase reactor (120) is configured to form a polyolefin including ethylene-propylene rubber in the second reaction space (121).

8. The apparatus for manufacturing a polyolefin according to claim 1, wherein the gas phase reactor (120) is configured to operate at an operating temperature of 50 to 100°C.

9. The apparatus for manufacturing a polyolefin according to claim 1, wherein the gas phase reactor (120) is configured to operate at an operating pressure of 1 to 60 bar.

## Patentansprüche

1. Vorrichtung zum Herstellen eines Polyolefins, umfassend:
einen Schlaufenreaktor (110), der einen ersten Reaktionsraum (111) beinhaltet; und
einen einzelnen Gasphasenreaktor (120), der einen zweiten Reaktionsraum (121) beinhaltet, in den ein erstes Produkt eingebracht wird, das in dem Schlaufenreaktor (110) produziert wird;
wobei ein Volumenverhältnis des zweiten Reaktionsraums (121) zum ersten Reaktionsraum (111) 1,2 oder mehr beträgt.

2. Vorrichtung zum Herstellen eines Polyolefins nach Anspruch 1, wobei der Schlaufenreaktor (110) so konfiguriert ist, dass er das erste Produkt aus einer Aufschlämmung, die ein flüssiges Olefinmonomer und ein Polyolefin beinhaltet, in dem ersten Reaktionsraum (111) produziert.

3. Vorrichtung zum Herstellen eines Polyolefins nach Anspruch 1, wobei der Schlaufenreaktor (110) eine Vielzahl von Schlaufenreaktoren (110a, 110b) ist, die in Reihe geschaltet sind.

4. Vorrichtung zum Herstellen eines Polyolefins nach Anspruch 1, wobei der Schlaufenreaktor (110) so konfiguriert ist, dass er bei einer Betriebstemperatur von 50 bis 100 °C arbeitet.

5. Vorrichtung zum Herstellen eines Polyolefins nach Anspruch 1, wobei der Schlaufenreaktor (110) so konfiguriert ist, dass er bei einem Betriebsdruck von 10 bis 100 bar arbeitet.

6. Vorrichtung zum Herstellen eines Polyolefins nach Anspruch 1, wobei der Schlaufenreaktor (110) so konfiguriert ist, dass er in einer Wasserstoff-(H₂-)Atmosphäre mit einer Konzentration von 300 bis 40.000 ppmv arbeitet.

7. Vorrichtung zum Herstellen eines Polyolefins nach Anspruch 1, wobei der Gasphasenreaktor (120) so konfiguriert ist, dass er ein Polyolefin ausbildet, das Ethylen-Propylen-Kautschuk in dem zweiten Reaktionsraum (121) beinhaltet.

8. Vorrichtung zum Herstellen eines Polyolefins nach Anspruch 1, wobei der Gasphasenreaktor (120) so konfiguriert ist, dass er bei einer Betriebstemperatur von 50 bis 100 °C arbeitet.

9. Vorrichtung zum Herstellen eines Polyolefins nach Anspruch 1, wobei der Gasphasenreaktor (120) so konfiguriert ist, dass er bei einem Betriebsdruck von 1 bis 60 bar arbeitet.

## Revendications

1. Appareil de fabrication d'une polyoléfine comprenant :
un réacteur en boucle (110) comprenant un premier espace de réaction (111) ; et
un unique réacteur en phase gazeuse (120) comportant un deuxième espace de réaction (121), dans lequel un premier produit produit dans le réacteur en boucle (110) est introduit ;
dans lequel un rapport volumique du deuxième espace de réaction (121) par rapport au premier espace de réaction (111) est supérieur ou égal à 1,2.

2. Appareil de fabrication d'une polyoléfine selon la revendication 1, dans lequel le réacteur en boucle (110) est configuré pour produire le premier produit à partir d'une boue comportant un monomère oléfinique liquide et une polyoléfine dans le premier espace de réaction (111).

3. Appareil de fabrication d'une polyoléfine selon la revendication 1, dans lequel le réacteur en boucle (110) est une pluralité de réacteurs en boucle (110a, 100b), qui sont connectés en série.

4. Appareil de fabrication d'une polyoléfine selon la revendication 1, dans lequel le réacteur en boucle (110) est configuré pour fonctionner à une température de fonctionnement de 50 à 100 °C.

5. Appareil de fabrication d'une polyoléfine selon la revendication 1, dans lequel le réacteur en boucle (110) est configuré pour fonctionner à une pression de fonctionnement de 10 à 100 bar.

6. Appareil de fabrication d'une polyoléfine selon la revendication 1, dans lequel le réacteur en boucle (110) est configuré pour fonctionner dans une atmosphère d'hydrogène (H₂) à une concentration de 300 à 40000 ppmv.

7. Appareil de fabrication d'une polyoléfine selon la revendication 1, dans lequel le réacteur en phase gazeuse (120) est configuré pour former une polyoléfine comportant du caoutchouc d'éthylène propylène dans le deuxième espace de réaction (121).

8. Appareil de fabrication d'une polyoléfine selon la revendication 1, dans lequel le réacteur en phase gazeuse (120) est configuré pour fonctionner à une température de fonctionnement de 50 à 100 °C.

9. Appareil de fabrication d'une polyoléfine selon la revendication 1, dans lequel le réacteur en phase gazeuse (120) est configuré pour fonctionner à une pression de fonctionnement de 1 à 60 bar.
